# EUROPEAN PATENT APPLICATION

(11) **EP 3 726 618 A1**
(43) Date of publication of application: **21.10.2020**
(21) Application number: 18887235.2
(22) Date of filing: 13.12.2018
(51) Int. Cl.: H01M 2/20

(54) **BATTERY COVER PLATE ASSEMBLY, SINGLE CELL BATTERY, BATTERY MODULE, POWER BATTERY, AND ELECTRIC VEHICLE**

(30) Priority: 13.12.2017 CN 201711330223
(71) Applicant: BYD Company Limited, Shenzhen, Guangdong 518118 (CN)
(72) Inventor: JIANG, Luxia, Shenzhen, Guangdong 518118 (CN); HU, Shichao, Shenzhen, Guangdong 518118 (CN); LU, Peng, Shenzhen, Guangdong 518118 (CN); WANG, Xinyue, Shenzhen, Guangdong 518118 (CN); WANG, Feifei, Shenzhen, Guangdong 518118 (CN)
(74) Representative: m patent group
(86) International application number: PCT/CN2018/120766
(87) International publication number: WO 2019/114775

(57) **Abstract**

A battery cover plate assembly, a cell, battery module, a power battery, and an electric vehicle are provided. The battery cover plate assembly includes a cover plate (110), an inner electrode terminal (109), and an outer electrode terminal (112). The inner electrode terminal (109) and the outer electrode terminal (112) are electrically connected by using a current interrupt device. The current interrupt device includes a score member (101) and a flipping member (102). The flipping member (102) is electrically connected to the score member (101). In addition, the flipping member (102) can act under an effect of air pressure to break a score (104) on the score member (101). The flipping member (102) forms an elongated structure extending along the cover plate.

## Description

### CROSS-REFERENCE TO RELATED APPLICATIONS

The present disclosure is proposed based on and claims priority to Chinese patent application No. 201711330223.4 filed on December 13, 2017. The entire content of the above-referenced application is incorporated herein by reference.

### FIELD

The present disclosure relates to the battery field, and relates to a battery cover plate assembly, a cell using the battery cover plate assembly, a battery module using the cell, a power battery using the battery module, and a vehicle using the power battery.

### BACKGROUND

As an energy storage unit, a battery plays an important role in various industries. For example, power batteries are widely used in fields such as new energy vehicles, etc. A battery pack of the power battery may have a battery module consisting of a plurality of cells connected in series or in parallel to achieve charging and discharging. During charging and discharging of power batteries, a battery management system (BMS) usually monitors changes of a voltage and a current and calculates a charge status. If voltage sampling is erroneous, battery overcharging may be caused. This is especially true for a ternary system. Overcharging to a specific extent may result in a risk of battery explosion.

In the related art, a voltage and a current of a battery are monitored, and a battery level is calculated by using a current integration method and an open circuit voltage method, and battery charging and discharging are thereby controlled. However, there are also disadvantages, such as a battery voltage sampling failure or a current sampling failure or a software failure. As a result, long-term battery charging cannot be controlled, especially during charging by using a charging pile, when communication between the charging pile and a battery manager fails, overcharging cannot be controlled. Overcharging to a specific extent may cause the battery to swell or even explode and catch fire.

Therefore, providing a current interrupting technology capable of forcibly interrupting a current is of positive significance.

### SUMMARY

The present disclosure is intended to provide a battery cover plate assembly, a cell using the battery cover plate assembly, a battery module using the cell, a power battery using the battery module, and a vehicle using the power battery.

The present disclosure further provides a cell having the battery cover plate assembly.

The present disclosure further provides a battery module having the cell.

The present disclosure further provides a power battery having the battery module.

The present disclosure further provides an electric vehicle having the power battery.

A first aspect of the present disclosure provides a cover plate, an inner electrode terminal located at an inner side of the cover plate, and an outer electrode terminal located at an outer side of the cover plate, the inner electrode terminal and the outer electrode terminal being electrically connected by using a current interrupt device, the current interrupt device including a score member and a flipping member, where the flipping member is to be electrically connected to the score member, the flipping member can act under an effect of air pressure to break a score on the score member, and the flipping member forms an elongated structure extending along a length direction of the cover plate.

According to the battery cover plate assembly of the present disclosure, the flipping member forms an elongated structure extending along the length direction of the cover plate, so that not only an area of contact with internal gas can be ensured, but also a part of the current interrupt device including the flipping member from which the cover plate is exposed can be less likely to extend out of the cover plate along a width direction and can even completely fall within a range of the cover plate, thereby avoiding interference to other apparatuses other than the cover plate while ensuring flipping sensitivity.

According to some embodiments of the present disclosure, an end of the elongated structure along the length direction is arc-shaped.

According to some embodiments of the present disclosure, the elongated structure is a waist-shaped structure or an elliptic structure.

According to some embodiments of the present disclosure, a first connection region to be electrically connected to the score member and a second connection region to be electrically connected to the outer electrode terminal of a battery are formed on the flipping member, at least the second connection region forming an elongated structure.

According to some embodiments of the present disclosure, the flipping member forms a cone-shaped sheet structure along a direction perpendicular to an upper surface of the cover plate, a small end of the cone forming the first connection region with an elongated structure, and a large end of the cone away from the score member forming the second connection region parallel to the first connection region with an elongated structure.

According to some embodiments of the present disclosure, thicknesses of the first connection region and the second connection region are both greater than a thickness of an action region between the first connection region and the second connection region.

According to some embodiments of the present disclosure, the thicknesses of the first connection region and the second connection region are 0.3-3 mm, and the thickness of the action region is 0.05-0.3 mm.

According to some embodiments of the present disclosure, a deformation cushion region is further formed on the flipping member, the deformation cushion region being disposed between the first connection region and the second connection region and around the first connection region.

According to some embodiments of the present disclosure, the deformation cushion region forms an annular groove structure surrounding the first connection region.

According to some embodiments of the present disclosure, a radial cross-section of the annular groove structure is arc-shaped or angular.

According to some embodiments of the present disclosure, the score member forms an elongated structure extending along the length direction of the cover plate.

According to some embodiments of the present disclosure, the score member includes a score region in which the score is formed, a first welding region to be electrically connected to the flipping member, and a second welding region to be electrically connected to the inner electrode terminal, the score region being disposed around the first welding region, and at least one of the first welding region and the second welding region being disposed in a plane different from a plane in which the score is disposed.

According to some embodiments of the present disclosure, the score is disposed in a plane different from planes in which the first welding region and the second welding region are disposed.

According to some embodiments of the present disclosure, the score member includes a score region and a boss protruding from the score region, the first welding region being formed on the boss, and the score being formed on the score region and disposed around the boss.

According to some embodiments of the present disclosure, the first welding region is formed on an upper surface of the boss and parallel to the score region, and an annular welding joint is disposed at an outer periphery of the upper surface.

According to some embodiments of the present disclosure, a ring wall protruding in a direction the same as a direction in which the boss protrudes is formed at an outer periphery of the score region, the second welding region being formed at an outer periphery of the ring wall and flush with an upper edge of the boss in a height direction.

According to some embodiments of the present disclosure, the second welding region, the score region, and the first welding region are sequentially arranged from outside to inside in a radial direction, and form a step structure gradually approaching the flipping member from outside to inside, the score is disposed around the first welding region, and the score region, the first welding region, and the second welding region are parallel to each other and respectively form an elongated structure.

According to some embodiments of the present disclosure, a ring wall protruding in a direction opposite to a direction in which the boss protrudes is formed at an outer periphery of the score region, the second welding region being formed at an outer periphery of the ring wall and parallel to the score region, and an annular welding joint being formed at an outer periphery of the second welding region.

According to some embodiments of the present disclosure, a sidewall of the boss and the ring wall are respectively perpendicular to the score region.

According to some embodiments of the present disclosure, the outer electrode terminal is electrically connected to the flipping member, the score member is electrically connected to the inner electrode terminal, a support ring is connected between a lower side of an outer periphery of the flipping member and the cover plate in a sealing manner, an outer periphery of the outer electrode terminal is electrically connected to an upper side of the outer periphery of the flipping member, and the support ring and the outer electrode terminal respectively form an elongated structure.

According to some embodiments of the present disclosure, the support ring does not extend out from an edge of the cover plate.

A second aspect of the present disclosure provides a cell. The cell includes a housing, a core accommodated in the housing, and a battery cover plate assembly packaging the housing. The battery cover plate assembly is the battery cover plate assembly provided in the present disclosure. The inner electrode terminal is electrically connected to the core, and the flipping member is in gas communication with inside of the housing.

A third aspect of the present disclosure provides a battery module, the cell provided in the present disclosure being disposed inside the battery module.

A fourth aspect of the present disclosure provides a power battery, including a pack body and a battery module disposed inside the pack body. The battery module is the battery module provided in the present disclosure.

A fifth aspect of the present disclosure provides an electric vehicle, the power battery provided in the present disclosure being disposed in the electric vehicle.

According to the above technical solutions, since the flipping member forms an elongated structure extending along the length direction of the cover plate, that is, a size of the flipping member along the cover plate is greater than sizes of the flipping member along other directions, not only an area of contact with internal gas can be ensured, but also a part of the current interrupt device including the flipping member from which the cover plate is exposed can be less likely to extend out of the cover plate along a width direction and can even completely fall within a range of the cover plate, thereby avoiding interference to other apparatuses other than the cover plate while ensuring flipping sensitivity.

Other features and advantages of the present disclosure will be described in detail in the following detailed description.

### BRIEF DESCRIPTION OF THE DRAWINGS

The accompanying drawings are provided to further understand the present disclosure, and they constitute a part of the application. The accompanying drawings, along with the detailed description below, are used to explain the present disclosure, and pose no limitation on the present disclosure. In the figures:
FIG. 1 is a partial three-dimensional schematic exploded view of a battery module according to an exemplary implementation of the present disclosure.
FIG. 2 is a cross-sectional view of a current interrupt device according to a first exemplary implementation of the present disclosure.
FIG. 3 is a cross-sectional view of a current interrupt device according to a second exemplary implementation of the present disclosure.
FIG. 4 is a three-dimensional schematic diagram of a score member according to the present disclosure based on the second exemplary implementation.
FIG. 5 is a three-dimensional schematic diagram of a flipping member according to a first exemplary implementation of the present disclosure.
FIG. 6 is a schematic cross-sectional view of a battery cover plate assembly of a current interrupt device according to a first implementation of the present disclosure.
FIG. 7 is a partial three-dimensional schematic structural diagram of a flipping member of a current interrupt device according to a third implementation of the present disclosure.
FIG. 8 is a top plan view of a flipping member of a current interrupt device according to a third implementation of the present disclosure.
FIG. 9 is a three-dimensional schematic structural diagram of a cell of a battery cover plate assembly according to a third implementation of the present disclosure.
FIG. 10 is a schematic structural diagram of an electric vehicle according to the present disclosure.

### DETAILED DESCRIPTION

The following describes specific embodiments of the present disclosure in detail with reference to the accompanying drawings. It should be understood that the specific implementation manners described herein are merely used to describe and explain the present disclosure but are not intended to limit the present disclosure.

In the present disclosure, unless otherwise stated, directional terms such as "up, down, left, and right" used herein are generally defined based on drawing directions of corresponding drawings, and "inner and outer" refer to inside and outside of a contour of a corresponding component.

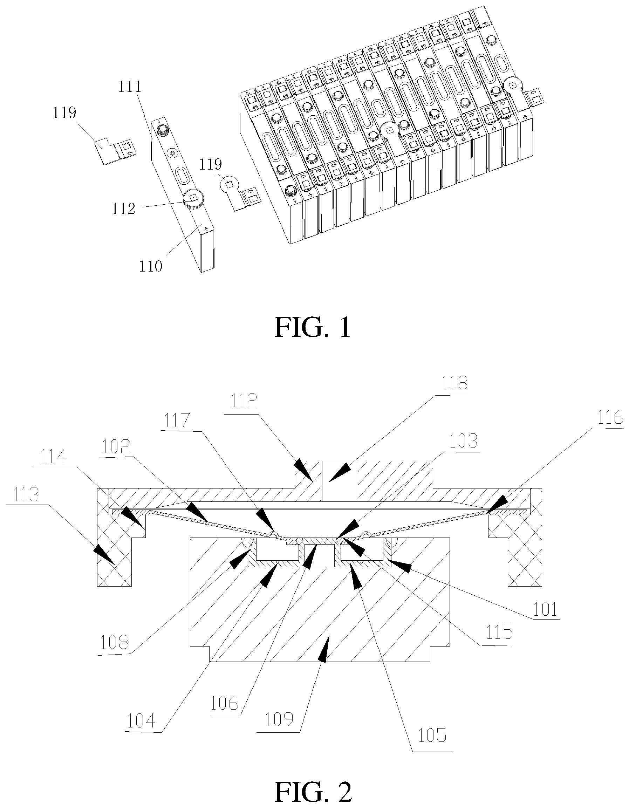

As shown in FIG. 1 to FIG. 10, the present disclosure provides the following technical solutions: a battery cover plate assembly 100, a cell 200 using the battery cover plate assembly 100, a battery module 300 using the cell 200, a power battery 400 using the battery module 300, and a vehicle using the power battery 400. As shown in FIG. 1, the current interrupt device is disposed between an outer electrode terminal 112 and a corresponding inner electrode terminal 109 for cutting off circuits inside and outside a battery. In the cell 200, a plurality of cells 200 are connected in series or in parallel to form the battery module 300, and may be placed in a battery pack to form the power battery 400. In addition to the field of the power battery 400, the various technical solutions provided in the present disclosure may also be widely applied to other battery fields. Specifically, in the present disclosure, the current interrupt device is described by using two implementations. The implementations are described in detail below with reference to the drawings.

First, as shown in FIG. 1, the implementations of the present disclosure each provide a battery module 300 including a plurality of cells 200. The cell 200 may include a housing 111, a core accommodated in the housing, an inner electrode terminal 109 electrically connected to the core, and a cover plate 110 packaging the housing, The outer electrode terminal 112 is disposed on the cover plate for completing current input and output through various electrode lead-out members 119. The current interrupt device is disposed between the outer electrode terminal and the inner electrode terminal 109 to control current input and output of the electrode terminals. In other words, when the current interrupt device in the cell 200 is in a conventional state, the core is in a conducting state. In this case, the electrode terminal can normally input and output a current to complete charging and discharging of the cell 200. However, in a dangerous state, such as battery overcharging, the current interrupt device can interrupt the current inputting of the electrode terminal, thereby avoiding battery overcharging, etc. Therefore, reliability of the current interrupt device as an important safety measure is crucial, that is, the current interrupt device needs to make a response quickly.

In the present disclosure, all current interrupt devices in the various implementations are mechanical structures for sensing air pressure. Specifically, the current interrupt device is in gas communication with inside of the housing of the cell 200 and can interrupt a flowing current under an effect of the air pressure. Specifically, current transfer can be interrupted by disconnecting internal components, thereby cutting off battery charging and discharging in time. A source of the used air pressure is as follows. When the battery is in a dangerous state such as overcharging, gas is generated inside the battery, resulting in an increase of the air pressure inside the housing, or when a battery temperature rises due to an abnormality during use of the battery, the air pressure inside the battery increases, resulting in pneumatic power that drives the current interrupt device.

For example, in the implementations of FIG. 2 to FIG. 3, the current interrupt device has a score member 101 and a flipping member 102 electrically connected to the score member 101, and the electrical connection between the flipping member 102 and the score member 101 can be cut off under the effect of the air pressure. In the implementations of the present disclosure, at least one of the flipping member and the score member may be broken. For example, a weak score may be made on a corresponding component to break the structure, thereby cutting off the electrical connection. Specifically, a score 104 is formed on the score member 101. In other words, under the effect of the internal air pressure, the score 104 may be broken through a flipping action of the flipping member 102, so as to cut off the electrical connection between the flipping member and the score member, thereby interrupting the current transfer.

A reason for adopting this method is that in the field such as the power battery 400, a relatively large flowing current is required. Therefore, a welding structure between the score member 101 and the flipping member 102 needs to be stable to prevent the large current from fusing the welding structure. Therefore, by disposing the score 104 on the score member 101, that is, making a weak portion with strength less than that of other regions in the corresponding part, the score member 101 and the flipping member 102 can be completely disconnected. The score is usually disposed around the welding region between the score member and the flipping member, to ensure complete disconnection between the score member and the flipping member.

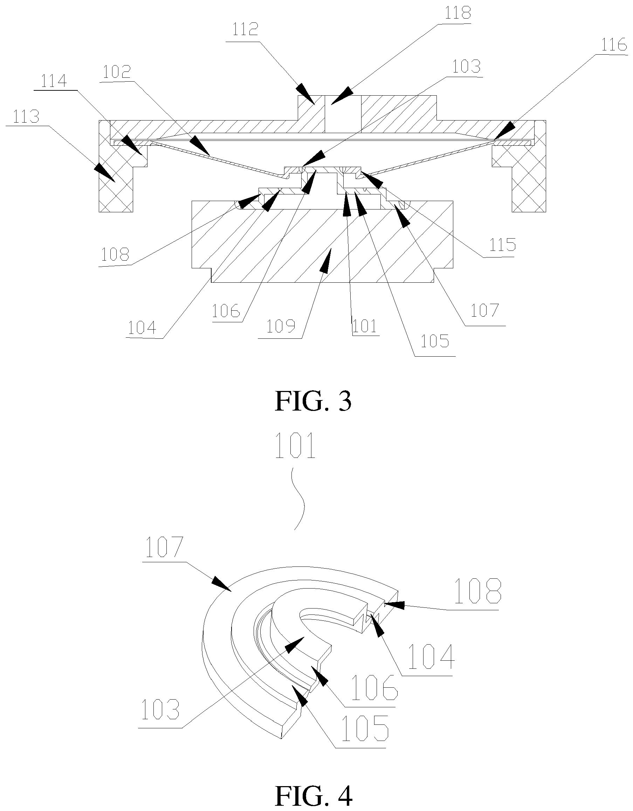

The score member 101 and the flipping member 102 in the two implementations of the present disclosure are described below with reference to FIG. 2 and FIG. 3.

As shown in FIG. 2 and FIG. 3, the present disclosure provides a score member in a current interrupt device. The score member 101 includes a score region 105 in which a score 104 is formed, a first welding region 103 to be electrically connected to the flipping member 102, and a second welding region 107 to be electrically connected to the inner electrode terminal 109. The flipping member 102 can act under an effect of air pressure to break the score 104 so as to cut off an electrical connection to the score member 101. After the flipping member 102 breaks the score 104, an electrical connection between the flipping member 102 and the second welding region 107 is cut off, thereby cutting off an electrical connection to the inner electrode terminal 109. In the present disclosure, the score 104 is disposed around the first welding region 103, and the score 104 may be a ring surrounding the first welding region 103. In addition, at least one of the first welding region 103 and the second welding region 107 is disposed in a plane different from a plane in which the score 104 is disposed. In other words, the plane in which the score 104 is located is different from the planes/plane in which the first welding region 103 and/or the second welding region 107 are/is located, so that not only mechanical impact on the score 104 on the score member 101 caused by an external force transmitted from the flipping member 102 can be effectively eliminated, but also thermal influence of welding stresses in the first welding region 103 and the second welding region 107 on a region in which the score 104 is located can be eliminated. In this way, reliability of the current interrupt device provided in the present disclosure is improved. The score 104 surrounding the first welding region 103 can be broken under the effect of the air pressure inside the battery. In this case, the electrical connection between the flipping member 102 and the score member 101 is completely cut off to interrupt the current.

As shown in FIG. 2 to FIG. 3, the score 104 is disposed in a plane different from the planes in which the first welding region 103 and the second welding region 107 are located, that is, the plane in which the score 104 is located is different from the plane in which the first welding region 103 is located and the plane in which the second welding region 107 is located. In some embodiments, the score member 101 includes a score region 105 and a boss 106 protruding from the score region 105, the first welding region 103 being formed on the boss 106, and the score 104 being formed on the score region 105 and disposed around the boss 106, so that the plane in which the score is located is different from the planes in which the first welding region and the second welding region are located. In some embodiments, the first welding region 103 is formed on an upper surface of the boss 106 and parallel to the score region, and an annular welding joint is disposed at an outer periphery of the upper surface.

As shown in FIG. 3 and FIG. 4, in a second implementation, the second welding region 107, the score region 105, and the first welding region 103 are sequentially arranged from outside to inside in a radial direction, and form a step structure gradually approaching the flipping member 102 from outside to inside. The second welding region 107 and the score region 105 are also located in different planes. The formed step structure has a cushion effect, so that the thermal influence of the welding stresses of the two welding regions on the score 104 can be avoided, and an external force transmitted from the inner electrode terminal 109 can also be cushioned, making the current interrupt device more reliable.

In the two implementations of the present disclosure, as shown in FIG. 2, the score member 101 includes a score region 105 and a boss 106 protruding from the score region 105. The first welding region 103 is formed on the boss 106, and the score 104 is formed on the score region 105 and disposed around the boss 106. In this way, the score and the first welding region are located in different planes. In some embodiments, the first welding region 103 is formed on an upper surface of the boss 106 and is parallel to the score region 105, and an annular welding joint is disposed at an outer periphery of the upper surface. Correspondingly, a first connection region 115 on the flipping member 102 may form a connecting hole for accommodating the boss 106. In this way, the outer periphery of the boss and an inner wall of the connecting hole are firmly welded by using the annular welding joint. The boss may be a cylindrical structure or may have a through hole structure in an axial direction of the cylindrical structure. Alternatively, as shown in FIG. 4, a through hole may be also disposed in the axial direction of the cylindrical structure. In other implementations, the score and the first welding region may be further disposed in different planes by using various convex or concave structures.

As shown in FIG. 2, in a first implementation, in order to establish an electrical connection to the inner electrode terminal 109 of the battery, an accommodating groove is usually disposed on the top end of the inner electrode terminal 109. Accordingly, a ring wall 108 protruding in a direction the same as a direction in which the boss 106 protrudes is formed at an outer periphery of the score region 105, an upper edge of the ring wall 108 being flush with an upper edge of the boss 106 in a height direction. In addition, an outer wall of the ring wall is to be electrically connected to the inner electrode terminal 109 of the battery to form the second welding region. The outer wall fits a shape of a groove wall of the accommodating groove of the inner electrode terminal 109 and is welded through the annular welding joint. In this implementation, the score member 101 can be completely accommodated in the accommodating groove of the inner electrode terminal 109. The structure is stable.

As shown in FIG. 3, in the second implementation, an accommodating groove is still disposed on the inner electrode terminal 109, the boss 106 of the score member 101 extending out of the accommodating groove. A ring wall 108 protruding in a direction opposite to the direction in which the boss 106 protrudes is formed at the outer periphery of the score region 105, and the second welding region 107 is formed at an outer periphery of the ring wall 108 and is parallel to the score region 105, so that the score member 101 forms the step structure. An annular welding joint to be electrically connected to the inner electrode terminal 109 of the battery is formed at an outer periphery of the second welding region 107. A lower surface of the second welding region 107 may be placed on the bottom wall of the accommodating groove, and the outer periphery and a sidewall of the accommodating groove are welded through the annular welding joint. Likewise, the structure is also stable.

In the second implementation, as shown in FIG. 3, a sidewall of the boss and the ring wall 108 are perpendicular to the score region 105 respectively. In other embodiments, there may be a specific angle, for example, a Z-shaped step is formed. In addition, the first welding region 103, the score region 105, and the second welding region 107 may each be a ring structure, that is, the first welding region 103 has a central hole. In other embodiments, the first welding region 103 may have no central hole.

The score member 101 in the two embodiments is described above, and the flipping member 102 in the two embodiments is described below.

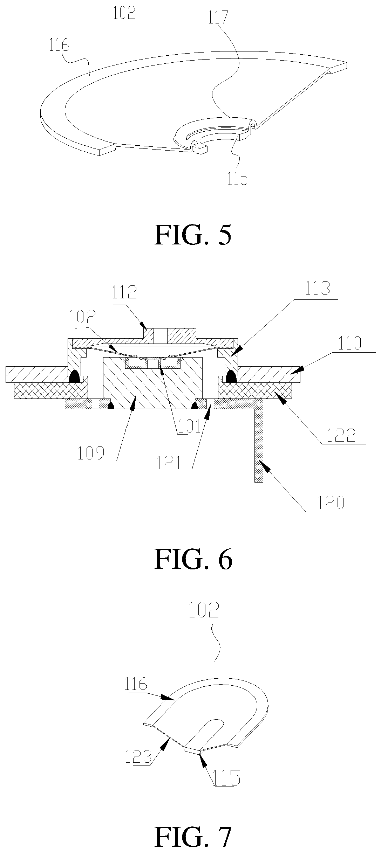

As shown in FIG. 2 to FIG. 5, a first connection region 115 to be electrically connected to the score member 101 and a second connection region 116 to be electrically connected to an outer electrode terminal 112 of a battery are formed on the flipping member 102. In addition, as shown in FIG. 2 and FIG. 5, a deformation cushion region 117 is further formed on the flipping member 102, the deformation cushion region 117 being disposed between the first connection region 115 and the second connection region 116 and around the first connection region 115. The deformation cushion region means that the region may be deformed prior to the flipping member 102, the first connection region 115, the second connection region 116, and the score member 101 under an external force, so as to cushion the external force. Accordingly, impact of the external force on the first connection region 115 and the score 104 on the score member 101 is reduced, improving the reliability of the current interrupt device.

In the two implementations of the present disclosure, the flipping member 102 forms a cone-shaped sheet structure, a small end of the cone forming the first connection region 115, and a large end of the cone away from the score member 101 forming the second connection region 116. The cone structure may be configured to dispose the two connection regions in different planes, and may provide a space for the flipping member 102 to flip upward under a force to break the score 104. In other possible implementations, the flipping member may also be an elastic flat member, etc.

As shown in FIG. 2 and FIG. 5, the deformation cushion region 117 in the present disclosure forms an annular groove structure surrounding the first connection region 115. In this way, a deformation cushion effect can be achieved through relative movement between groove walls of the annular groove under an effect of an external force. In other possible implementations, the deformation cushion region 117 may also be implemented by a structure such as a deformation chamber or elastic materials.

As shown in FIG. 2 and FIG. 5, in the first implementation, a radial cross-section of the annular groove structure is arc-shaped, for example, is a semi-circle protruding toward the outer electrode terminal 112. In this way, an external force transmitted from the second connection region 116 can be absorbed through the deformation of the arc-shaped groove wall, thereby reducing impact on the first connection region 115 and the score member 101. In other possible implementations, the cross-section of the annular groove may also be angular, that is, the cross-section has two angled sides, which can also provide a cushion effect.

As shown in FIG. 3, in the second implementation, the boss 106 of the score member 101 protrudes from the accommodating groove of the inner electrode terminal 109.

As shown in FIG. 2 and FIG. 3, in the two implementations of the present disclosure, in order to ensure that the flipping member can be acted by gas inside the battery, a support ring 113 is connected between a lower side of an outer periphery of the flipping member 102 and the cover plate 110 in a sealing manner, and an outer periphery of the outer electrode terminal 112 is electrically connected to an upper side of the outer periphery of the flipping member 102. In this way, the gas generated inside the battery can act on the flipping member 102 without leakage. In order to enable the flipping member 102 to act normally, the outer electrode terminal 112 forms a cap structure and may have a through hole 118 for discharging gas during acting of the flipping member 102, thereby preventing the action of the flipping member from being restored under the effect of the air pressure. In addition, in two implementations in which the cover plate 110 is conductive and insulative, an insulating material or a conductive material may be selected for the support ring 113 for supporting. Generally, the support ring 113 may be a ceramic ring so that the cover plate 110 is insulative. Specifically, a support flange 114 is formed on an inner wall of the support ring 113, the outer peripheries of the flipping member 102 and the outer electrode terminal 112 being supported on an upper surface of the support flange 114, so as to ensure stable working of the current interrupt device.

The current interrupt device provided in the present disclosure includes the above score member 101 and the above flipping member 102, and the score member 101 is electrically connected to the flipping member 102 through the first welding region 103.

The present disclosure provides a battery cover plate assembly 100. As shown in FIG. 6, the battery cover plate assembly includes a cover plate 110, an inner electrode terminal 109 located at an inner side of the cover plate 110, and an outer electrode terminal 112 located at an outer side of the cover plate 110. The inner electrode terminal 109 and the outer electrode terminal 112 are electrically connected by using the above current interrupt device. The current interrupt device includes a score member 101 and a flipping member 102. The flipping member 102 is to be electrically connected to the score member 101. The flipping member 102 can act under an effect of air pressure to break a score 104 on the score member 101. After the flipping member 102 breaks the score 104, an electrical connection to the inner electrode terminal 109 can be cut off, thereby cutting off the electrical connection to the score member 101. In some embodiments, the outer electrode terminal 112 is electrically connected to the flipping member 102, and the score member 101 is electrically connected to the inner electrode terminal 109.

The inner electrode terminal 109 is welded to an inner lead-out member 120 electrically connected to a core. Specifically, a welding hole may be formed on the inner lead-out member 120. The inner electrode terminal 109 forms a columnar structure and is embedded in the welding hole to be welded to the inner lead-out member 120. In order to prevent the cover plate 110 from being conductive, a cover plate insulating member 122 is disposed between the cover plate 110 and the inner lead-out member 120, and the inner electrode terminal 109 may pass through the cover plate insulating member with a gap to be welded to the score member 101. In order to ensure sealing, a lower end of the support ring 113 is welded to the cover plate. Ceramic materials may be used to ensure insulation of the current interrupt device and the cover plate 110. A duct is formed on the cover plate 110 to facilitate mounting of the current interrupt device. In addition, in order to ensure that the gas inside the battery can act on the flipping member 102, an air hole 121 is formed on the inner lead-out member 120, so that the gas can act on the flipping member 102 through the air hole 121.

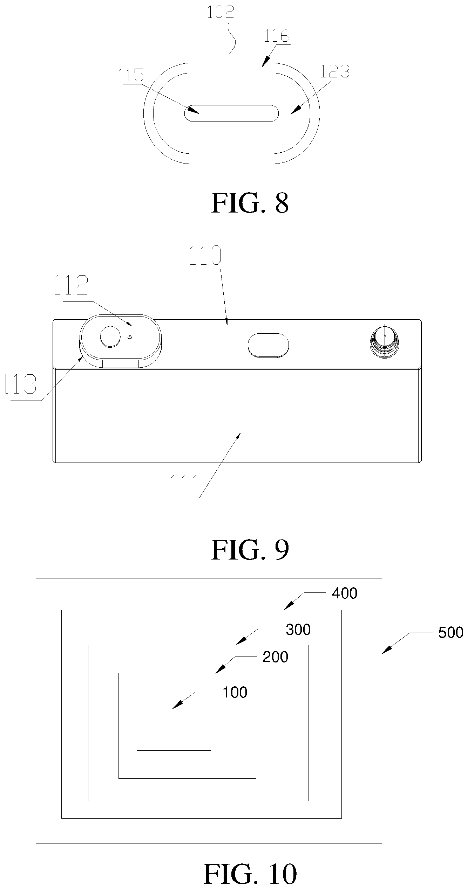

As shown in FIG. 7 and FIG. 8, the battery cover plate assembly 100 provided in the third implementation of the present disclosure includes a flipping member 102. The flipping member 102 forms an elongated structure extending along the cover plate 110 based on the above embodiments. The elongated structure herein means that in a cross-section of the elongated structure parallel to the cover plate 110, a size along the cover plate is greater than sizes along other directions. Therefore, as shown in FIG. 9, since the flipping member 102 forms an elongated structure extending along the length direction of the cover plate, not only an area of contact with internal gas can be ensured, but also a part of the current interrupt device including the flipping member 102 from which the cover plate 110 is exposed in FIG. 1 can be less likely to extend out of the cover plate 110 along a width direction, for example, and can even completely fall within a range of the cover plate, which is shown in FIG. 9, thereby avoiding interference to other devices other than the cover plate 110 while ensuring flipping sensitivity.

As shown in FIG. 7 to FIG. 9, in a third implementation of the present disclosure, an end of the elongated structure along the length direction is arc-shaped, that is, a cross-section of the elongated structure parallel to the cover plate has a rectangle at a middle part and arc-shaped structures at two ends, that is, the structure has no corners, so as to not only adapt to the structure of the cover plate 110, but also help form the annular flipping member 102 and other corresponding structures, such as the score member 101, the support ring 113, and the outer electrode terminal 112 that cooperate with the flipping member. In other embodiments, the elongated structure may also be a waist-shaped structure or an elliptic structure, and a long axis of the waist-shaped structure or an elliptic cross-section of the elliptic structure is a direction of the cover plate. In some embodiments, the cross-section of the elongated structure parallel to the cover plate may also be other shapes such as a rectangular cross-section.

In a third implementation, since the outer electrode terminal 112 and the support ring 113 are connected to the flipping member 102 outside the cover plate 110, the outer electrode terminal and the support ring may be designed to elongated structures cooperating with each other. In this case, in order to connect the components, at least the second connection region 116 in the flipping member 102 connected to the outer electrode terminal 112 and the support ring 113 forms an elongated structure. Since the support ring 113 is connected to the cover plate 110, an elongated structure formed by the support ring may be designed to skip extending out of the edge of the cover plate 110, which is specifically a width edge of the cover plate 110. Optionally, a width edge of the support ring 113 is flush with the edge of the cover plate 110. In this way, relatively large design space and stress space are obtained for the flipping member 102.

Shapes of the first connection region 115 and the score member 101 connected thereto may not be limited. In this embodiment, as shown in FIG. 7, the first connection region 115 and the score member 101 also correspondingly form an elongated structure extending along the length direction of the cover plate. The score member 101 may be the score member forming a step structure in the second implementation. An end of the elongated structure along the length direction is arc-shaped, and the elongated structure may also be an elliptic structure or a waist-shaped structure.

In continuing description of the flipping member 102 in this implementation, similar to the first and second implementations, the flipping member 102 forms a cone-shaped sheet structure along a direction perpendicular to an upper surface of the cover plate 110, a small end of the cone forming the first connection region 115 with an elongated structure, and a large end of the cone away from the score member 101 forming the second connection region 116 parallel to the first connection region 115 with an elongated structure. In some embodiments, the second connection region 116 is a raised-edge structure to facilitate connection to both the support ring 113 and the outer electrode terminal 112.

In this implementation, in order to ensure connection strength, thicknesses of the first connection region 115 and the second connection region 116 are both greater than a thickness of an action region 123 between the first connection region and the second connection region. Specifically, the thicknesses of the first connection region and the second connection region each may be 0.3-3 mm, and the thickness of the action region 123 may be 0.05-0.3 mm. The design is also applicable to the flipping member 102 in other embodiments.

In this implementation, the score member 101 forms an elongated structure extending along the cover plate 110. As shown in FIG. 4, the structure may be the score member 101 in the second implementation. The score region 105, the first welding region 103, and the second welding region 107 are parallel to each other and respectively form an elongated structure, for example, an elliptic structure.

As shown in FIG. 10, the present disclosure provides a cell 200, including a housing 111, a core accommodated in the housing, and a battery cover plate assembly 100 packaging the housing 111. An inner electrode terminal 109 is electrically connected to the core, and a flipping member 102 is in gas communication with inside of the housing.

As shown in FIG. 10, the present disclosure provides a battery module 300, the above cell 200 being disposed inside the battery module 300.

As shown in FIG. 10, the present disclosure provides a power battery 400, including a pack body and the above battery module 300 disposed inside the pack body.

As shown in FIG. 10, the present disclosure provides an electric vehicle 500, the above power battery 400 being disposed in the electric vehicle 500.

Five embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A battery cover plate assembly, comprising: a cover plate, an inner electrode terminal located at an inner side of the cover plate, and an outer electrode terminal located at an outer side of the cover plate, the inner electrode terminal and the outer electrode terminal being electrically connected by using a current interrupt device, the current interrupt device comprising a score member and a flipping member, wherein the flipping member is to be electrically connected to the score member, the flipping member can act under an effect of air pressure to break a score on the score member, and the flipping member forms an elongated structure extending along a length direction of the cover plate.

2. The battery cover plate assembly according to claim 1, wherein an end of the elongated structure along the length direction is arc-shaped.

3. The battery cover plate assembly according to claim 1, wherein the elongated structure is a waist-shaped structure or an elliptic structure.

4. The battery cover plate assembly according to any of claims 1 to 3, wherein a first connection region to be electrically connected to the score member and a second connection region to be electrically connected to the outer electrode terminal of a battery are formed on the flipping member, at least the second connection region forming an elongated structure.

5. The battery cover plate assembly according to claim 4, wherein the flipping member forms a cone-shaped sheet structure along a direction perpendicular to an upper surface of the cover plate, a small end of the cone forming the first connection region with an elongated structure, and a large end of the cone away from the score member forming the second connection region parallel to the first connection region with an elongated structure.

6. The battery cover plate assembly according to claim 3, wherein thicknesses of the first connection region and the second connection region are both greater than a thickness of an action region between the first connection region and the second connection region.

7. The battery cover plate assembly according to claim 6, wherein the thicknesses of the first connection region and the second connection region are both 0.3-3 mm, and the thickness of the action region is 0.05-0.3 mm.

8. The battery cover plate assembly according to any of claims 1 to 7, wherein a deformation cushion region is further formed on the flipping member, the deformation cushion region being disposed between the first connection region and the second connection region, and around the first connection region.

9. The battery cover plate assembly according to claim 8, wherein the deformation cushion region forms an annular groove structure surrounding the first connection region.

10. The battery cover plate assembly according to claim 9, wherein a radial cross-section of the annular groove structure is arc-shaped or angular.

11. The battery cover plate assembly according to any of claims 1 to 10, wherein the score member forms an elongated structure extending along the length direction of the cover plate.

12. The battery cover plate assembly according to any of claims 1 to 11, wherein the score member comprises a score region in which the score is formed, a first welding region to be electrically connected to the flipping member, and a second welding region to be electrically connected to the inner electrode terminal, the score region being disposed around the first welding region, and at least one of the first welding region and the second welding region being disposed in a plane different from a plane in which the score is disposed.

13. The battery cover plate assembly according to claim 12, wherein the score is disposed in a plane different from planes in which the first welding region and the second welding region are disposed.

14. The battery cover plate assembly according to claim 13, wherein the score member comprises a boss protruding from the score region, the first welding region being formed on the boss, and the score being formed on the score region and disposed around the boss.

15. The battery cover plate assembly according to claim 14, wherein the first welding region is formed on an upper surface of the boss and parallel to the score region, and an annular welding joint is disposed at an outer periphery of the upper surface.

16. The battery cover plate assembly according to claim 15, wherein a ring wall protruding in a direction the same as a direction in which the boss protrudes is formed at an outer periphery of the score region, the second welding region being formed at an outer periphery of the ring wall and flush with an upper edge of the boss in a height direction.

17. The battery cover plate assembly according to claim 16, wherein the second welding region, the score region, and the first welding region are sequentially arranged from outside to inside in a radial direction, and form a step structure gradually approaching the flipping member from outside to inside, the score is disposed around the first welding region, and the score region, the first welding region, and the second welding region are parallel to each other and respectively form an elongated structure.

18. The battery cover plate assembly according to claim 17, wherein a ring wall protruding in a direction opposite to the direction in which the boss protrudes is formed at the outer periphery of the score region, the second welding region being formed at an outer periphery of the ring wall and parallel to the score region, and an annular welding joint being formed at an outer periphery of the second welding region.

19. The battery cover plate assembly according to claim 18, wherein a sidewall of the boss and the ring wall are respectively perpendicular to the score region.

20. The battery cover plate assembly according to any of claims 1 to 19, wherein the outer electrode terminal is electrically connected to the flipping member, the score member is electrically connected to the inner electrode terminal, a support ring is connected between a lower side of an outer periphery of the flipping member and the cover plate in a sealing manner, an outer periphery of the outer electrode terminal is electrically connected to an upper side of the outer periphery of the flipping member, and the support ring and the outer electrode terminal respectively form an elongated structure.

21. The battery cover plate assembly according to claim 19, wherein the support ring does not extend out from an edge of the cover plate.

22. A cell, comprising a housing, a core accommodated in the housing, and a battery cover plate assembly packaging the housing, wherein the battery cover plate assembly is the battery cover plate assembly according to any of claims 1 to 21, the inner electrode terminal is electrically connected to the core, and the flipping member is in gas communication with inside of the housing.

23. A battery module, wherein the cell according to claim 22 is disposed inside the battery module.

24. A power battery, comprising a pack body and a battery module disposed inside the pack body, wherein the battery module is the battery module according to claim 23.

25. An electric vehicle, wherein the power battery according to claim 24 is disposed in the electric vehicle.
